# EUROPEAN PATENT APPLICATION

(11) **EP 4 762 945 A1**
(43) Date of publication of application: **24.06.2026**
(21) Application number: 25220821.0
(22) Date of filing: 04.12.2025
(51) Int. Cl.: A23L 29/20, A23L 29/206, A23L 29/212, A23L 33/15, A23L 33/16, A23L 33/19, A23L 33/21, A23L 33/00

(54) **FOODS FOR SPECIAL MEDICAL PURPOSES (FSMP) EASILY SWALLOWABLE AND SUITABLE FOR INTEGRATING NUTRITIONAL SUBSTANCES.**

(30) Priority: 19.12.2024 IT 202400029004
(71) Applicant: TECNOBLEND SRL, 70022 Altamura (BA) (IT); De Nisi, Romina, Roma (IT); Scorsone, Mauro, Roma (IT)
(72) Inventor: DE NISI, Romina, Roma (IT); NICOLETTI, Francesco, Altamura (BA) (IT)
(74) Representative: Bruni, Giovanni

(57) **Abstract**

The scope of the present invention generally concerns substances used for the care and treatment of patients who have practical difficulties in swallowing. In general, it can be stated that practical difficulties in eating can represent the main cause of some cases of malnutrition, and even when they are not the main cause, such difficulties evidently represent a significant obstacle to the recovery of malnourished patients.

The present invention indicates how to produce a class of products that can be, formally and according to industry standards, classified as "Foods for Special Medical Purposes" (FSMP). The FSMP according to the invention can have a varied and controllable composition, with the aim of meeting the diverse nutritional needs of malnourished individuals, and, at the same time, have the shape and consistency of an ice cream or a mousse, i.e., the shape and consistency that is by far the easiest for many patients who require them to consume.
The result is achieved by teaching how to correctly balance two groups of ingredients:
a first group of ingredients with thickening and structuring properties, that is, suitable for guaranteeing a delay in melting after cooling, and the creamy consistency that the FSMP must assume during administration,
and a second group of additional elementary ingredients, each in quantities sufficient to provide its own nutritional contribution, so as to reach the nutritional intake set for the FSMP, adding it to the nutritional contributions already provided by the ingredients of the first group with thickening and structuring properties.

## Description

### Technical field of the Invention

The field of application of the present invention relates, in general, to substances to be used for the care and treatment of patients suffering from particular health problems. More specifically, the proposed solution finds application in the oral administration of nutrients, or curative substances in general, to all those patients who have practical difficulties in swallowing.

### Prior Art

Malnutrition is a global problem with underlying environmental, economic, social, and medical causes. The World Health Organization (WHO) defines malnutrition as an imbalance between energy and nutrient intake and the body's needs for growth and maintenance of specific functions.

Globally, the phenomenon is certainly significant, which explains the efforts already being made to manage this problem. As mentioned, however, the causes of malnutrition can be varied, so not all cases should be managed the same way.

Cases in which malnutrition is associated with practical difficulties in eating are quite frequent, and their treatment poses specific problems.

In general, and without delving into strictly medical issues, it can be said that practical difficulties in food intake can, in a significant number of cases, represent the main cause of some cases of malnutrition, and even in cases where they are not the main cause, such difficulties evidently represent a significant obstacle to the recovery of malnourished patients.

Even with regard to the nature of the aforementioned practical difficulties in eating, which a significant number of people suffer from, it's not worth delving into, as this is a specifically medical topic. However, by way of example, and just to make it clear that the problem cannot be considered negligible, we can list a series of cases in which these practical difficulties in eating actually occur.

Consider patients with "broncho-pneumopathy," in intensive care or with heart problems, who are subjected to procedures designed to administer oxygen through masks or other devices that dry out the mouth; or patients with breathing difficulties, such as "dyspnea," who often use masks or devices to help them breathe; or patients with cancer who are weakened by chemotherapy or other treatments that cause severe nausea, a tendency to vomit, or simply a loss of appetite; or patients suffering from "dysphagia" (a motor dysfunction that makes it difficult to swallow many substances), or elderly patients with a wide variety of problems.

We won't go on to list all the cases where practical difficulties in eating exist; it's enough to simply conclude that such cases are significantly present, that they must be managed daily, both in hospital and elsewhere, and that they normally affect people in a state of health that it at best precarious.

Improving the health status of patients, especially if admitted to a hospital facility, also leads to a reduction in hospital stays, with the advantage of treating a larger number of patients through a more efficient use of public and private resources.

The present invention therefore addresses the problem of offering a concrete solution to the treatment of patients who need to recover from their state of malnutrition, but who have practical difficulties in consuming the foods, or nutrients, that it would be appropriate to administer to them.

Last but not least, we can include in the category of malnourished those who have suffered a cerebral and/or physical insult as a result of trauma and who are unable to coordinate the intake of liquid foods (soups, broths) in the short term or who are unable to use both upper limbs to eat solid foods that must be cut or fork-forked.

It is therefore clear that a creamy food is best eaten with just a teaspoon, and is advantageous not only in terms of meeting the individual's daily nutritional needs, but also because it generates gratification in being able to independently perform an action that has drastically been lost.

Treatment of malnutrition should always be managed under medical supervision, in the simplest cases by prescribing a diet based on conventional foods, but, in cases where more precise control of the nutrients administered is necessary, by resorting to a particular class of food substances: the so-called "Foods for Special Medical Purposes", which are also commonly referred to using the acronym "FSMP".

According to the definition of the Italian Ministry of Health, FSMP (Foods for Special Medical Purposes) are [...] *products aimed at the dietary treatment of subjects suffering from disorders, diseases or medical conditions that determine nutritional vulnerability, that is, the inability or significant difficulty in feeding themselves using common foods, including food supplements, to meet their nutritional needs* [...].

More specifically, EU Regulation 609/2013 defines FSMP as a [...] *food product specifically developed or formulated for the dietary management of patients, including infants, to be used under medical supervision; intended for the complete or partial nutrition of patients with a limited, impaired, or impaired capacity to ingest, digest, absorb, metabolize, or excrete common foods or certain nutrients* [...], *or with other nutritional needs determined by clinical conditions and whose dietary management cannot be achieved solely by modification of the normal diet* [...].

FSMPs are therefore formally defined products that can be marketed as such, provided that the label includes instructions for their correct use according to the following classification: that is, whether they are foods to be used as a supplement to the diet or as the sole source of nutrition, including general indications on the quantities to be consumed to cover nutritional requirements.

Above all, FSMPs must also include a label warning that they should be used under medical supervision: this is a fundamental distinction from food supplements, which are designed and marketed for use at the consumer's discretion based on information provided on the label or through other forms of communication, such as advertising.

Instead, FSMPs should be understood as "dietary management" tools, conceptually intended for doctors and not directly for consumers. Indeed, it is the doctor who, based on their composition and specific purpose, must identify the cases in which to recommend their use as part of the patient's nutritional management.

This aspect, that is, use subject to medical supervision, is particularly important because FSMPs, in theory, and since they also belong to the class of food products (and not medicines, strictly speaking), would not be subject to medical prescription constraints.

In summary, for a product to be considered a FSMP, it must satisfy the four conditions listed below:
1) the product must not already be available as a food supplement (or even as a food with added vitamins and/or minerals);
2) there must be a scientific rationale that, beyond any potential benefits, justifies its role as an effective nutritional management tool; in this regard, any demonstrable benefit on the course and symptoms of the disease must be correlated and consistent with the aforementioned role (see the guidelines on studies conducted to evaluate the safety and properties of food products - www.salute.gov.it);
3) such rationale must be supported by solid scientific evidence;
4) for appropriate inclusion in the patient's dietary management, the use of the product must necessarily be subordinated to medical supervision.

These FSMPs are foods for specific groups (FSG) pursuant to Regulation (EU) 609/2013 and are currently regulated by Commission Regulation (EU) 2016/128 at Community level, and specifically they are subject to the national sectoral rules set out in Legislative Decree 27 January 1992, no. 111 *"Implementation of Directive 89*/*398*/*EEC relating to products intended for particular nutritional uses";* therefore, FSMPs are foods with specific characteristics and are subject to legislation.

Above, by way of example, the regulatory references valid in Italy have been briefly cited, but the principles underlying the law are of an absolutely general nature, given that legislation similar to the Italian one is substantially present in many countries.

Generally, in many countries, and despite possible differences from country to country, the placing on the market of a food subject to notification by a food business operator is subject to the outcome of a procedure by a competent authority, which assesses its compliance with current legislation in order to ensure product safety and correct information for consumers.

In Italy (but the situation is similar, mutatis mutandis, in most countries around the world), FSMPs placed on the market are notified to the Ministry of Health as such; therefore, a complete list of them is available from public registers, which are freely available, and highlights how these foods can be administered in various forms.

Specifically, currently available FSMPs come in various forms: either as essentially solid substances (more or less soft, in the form of pills or bars), or as powdered substances to be taken after being dissolved (typically in water), or as liquid substances that can be taken directly, either pure or dissolved. In any case, at the current state of the art, they have not been notified to the Ministry of Health frozen FSMPs or ice cream preparations; that is, products that can vary in physical state while maintaining their nutritional characteristics, using the same preparation process and ensuring optimal usability and pleasantness to the taste when administered at a temperature ranging from -8° to -18° degrees.

The above observation is particularly interesting, and for this reason it is highlighted. This interest stems from the fact that ice cream is considered a particularly easy food to consume: certainly, easier than swallowing liquids and solids in various forms.

The fact that eating and swallowing ice cream is particularly easy is a fact that can be verified through common experience; however, it is also a fact studied and confirmed on the basis of scientific evidence (see "*Using ice cream as an effective vehicle for energy*/*nutrient delivery in the elderly" -* INTERNATIONAL JOURNAL OF GASTRONOMY AND FOOD SCIENCE 16-2019 100140).

In many cases, pureed foods can also be an interesting solution, but the meals may become uninteresting for those who are forced to eat such preparations on a regular basis. Ultimately, therefore, it can be stated that the known FSMPs, available for consumption, are currently offered in forms that in many cases do not represent the optimal form for administration to subjects who, for various reasons, may have swallowing difficulties. Furthermore, considering that the administration of FSMPs must complement or replace a meal, it is emphasized that the administration methods currently adopted do not seem to address an aspect to which, instead, it would be appropriate to give greater importance: that is, also focusing on the pleasure that each person should experience when eating.

### Purpose and summary of the invention

The general purpose of the present invention is therefore to indicate a class of products, or the method for their preparation, which can be formally classified, according to the regulations of the sector, as a class of "Foods for Special Medical Purposes" (FSMP) and which, at the same time, can be taken like an ice cream or a mousse.

In fact, the consistency and freshness of ice creams determine one of the best forms, if not the best form, that a food can assume so that a person with swallowing difficulties and/or motor coordination can eat independently.

Another purpose of the invention is to indicate a class of FSMP, or the method for their preparation, whose composition is as varied and controllable as possible; in order to cover the different nutritional needs that different subjects suffering from malnutrition may have.

This must be ensured by appropriately managing the fact that the consistency of an ice cream must still be obtained with ingredients with their own nutritional properties, but avoiding that these interfere in a way that is difficult to manage with the nutritional properties for which each specific FSMP must be prepared.

Finally, another important aim of the invention is to indicate a class of FSMP, or the method for their preparation, which facilitates their conservation and preparation for their administration to patients.

A refrigerated food (+6° / -18°), in fact, may seem a little more difficult to manage than a pill or a bottle containing a liquid: in fact, the temperature must be maintained and, in general, once the "portion" to be presented to the patient has been prepared, it must be served promptly.

Well, despite being aware of these differences, the FSMPs according to the invention must be able to be prepared and managed in any facility where potential patients are hosted (hospitals, nursing homes, private homes with various forms of assistance, etc.), and without requiring overly specific equipment or the presence of personnel with particular specializations or skills.

It is clear that the simpler the management of such refrigerated FSMPs in the form of ice cream or mousse [from -18° (ice cream) to + 6° (mousse)], the more their diffusion will be favored, thus allowing a greater number of patients to benefit from the advantages associated with the teachings of the invention itself.

The purposes set out for this invention are achieved through the use of a set of mixed essential ingredients, suitable for creating a FSMP with a pre-established nutritional intake in terms of proteins, caloric density, fats, sugars, mineral salts, vitamins and fibers; said FSMP being supplied in the form of a granular preparation, or a powder, which:
i. with the addition of a fluid substance that acts as a solvent, such as water, or milk, or vegetable drinks or cream (as per the individual patient's preference),
ii. and suitably cooled.
   it takes on the creamy consistency of an ice cream or a mousse, and said FSMP comprises two groups of ingredients suitably mixed:
   a. a first group of ingredients, available in granular or powder form, having thickening and structuring properties, i.e., ingredients suitable for guaranteeing a delay in dissolving after cooling, and the creamy consistency that the FSMP must have to be consumed
   b. and a second group of other elementary ingredients, always in granular or powder form, each in such quantity as to provide its own nutritional contribution, so as to reach said pre-established nutritional intake, set for said FSMP, by adding it to the nutritional contributions already provided by said ingredients with thickening and structuring capacity indicated in the previous point "a", and by the fluid substance indicated in the previous point "i."

The variety of embodiments of the invention depends mainly on the nutritional intake set for each specific FSMP.

However, different implementation forms may also differ in the choice of said ingredients with thickening and structuring properties, which may consist of different categories of substances, present alternatively or in combination, including: additives, natural fibers, animal or vegetable proteins and fats.

Furthermore, the aforementioned set of essential ingredients mixed with a solvent, as indicated above, to produce a ready-to-serve FSMP, can vary its consistency from semi-solid/creamy to liquid depending on the patient's momentary needs, only varying the time it remains in the freezer.

The main advantage of the present invention is that its teachings enable it to fulfill the purposes for which it was intended.

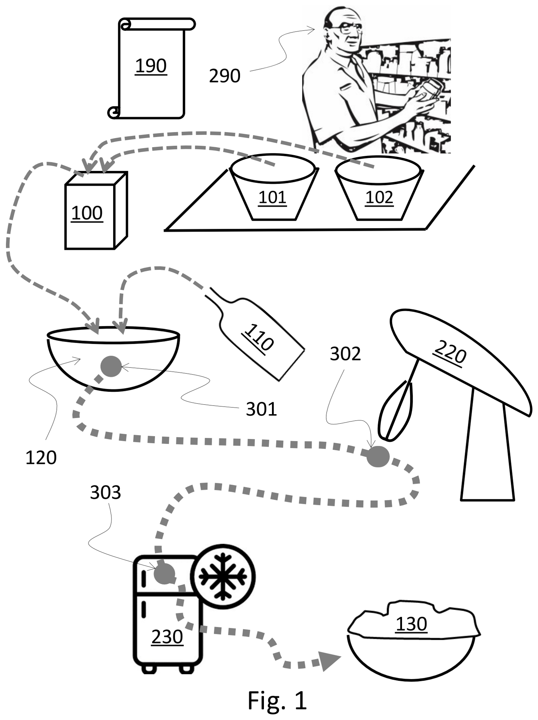

Furthermore, the invention also presents further advantages, which will become more evident from the following description, which illustrates further details of the invention itself, through some forms of implementation, from the attached claims, which form an integral part of this description, and from the attached Figure 1 in which a pictogram is proposed which summarizes how the invention is realized and used.

### Detailed description

As a first observation, it is worth underlining that the use of this set of essential ingredients mixed together, and proposed in granular or powder form, is particularly suitable for supporting a very simple method, practicable almost anywhere, for the preparation of a food based on a generic FSMP, which can be defined in a very flexible way to satisfy a very wide range of nutritional needs of different patients.

In its essential phases, this method of preparing a food based on a generic FSMP involves:
A. taking a dose of the said preparation in granular or powder form, which constitutes the heart of the invention, and
B. preparing an initially liquid food, by diluting in a fluid food substance said dose of said preparation in granular form, indicated in the previous step "A.", said dilution being perfected by manual mixing, for example with a whisk or with another type of tool suitable for facilitating the manual mixing operation, and
C. continuing the preparation by arranging a short conservation of the initially liquid food, indicated in the previous step "B." optionally
   ✔ either in the freezer, at a temperature between -17° and -21°, thus obtaining a creamy food with the consistency of ice cream,
   ✔ or in the fridge, where, after a short period of storage, the food becomes mousse-like in consistency;
      (these transformations take place thanks to the presence, in the said preparation in granular form, of appropriate ingredients with thickening and structuring properties);
D. after at least one hour, or for a period of time depending on the physical state of interest, the creamy food indicated in the previous step "C." is removed from the freezer, or from the refrigerator, in the case of preparing a mousse, and the finished food is presented to the patient for whom it was prepared.

The main effect achieved by the present invention, as well as by the innovation introduced therein, consists in having succeeded in making pleasant to the palate. and with the right consistency, a group of ingredients that provide a predetermined (and predeterminable) nutritional contribution with considerable accuracy, in terms of caloric and protein concentration, in terms of mineral salt and vitamin intake, and also guaranteeing a correct balance of fats, sugars and fibers.

Precisely with reference to the creamy consistency, it is adaptable, even during preparation, and can be assessed on the spot, based on the swallowing needs of the malnourished patient, who will be able to easily absorb the nutrients he needs.

Furthermore, even when preparing multiple portions for non-individual administration, each one can be adapted to the needs of the moment, independently.

The product has the ability to change its state, without losing its nutritional components and without specific alterations to the preparation method, adapting to the patient's needs; all these prerogatives effectively make the product capable of addressing a variety of problems that are currently encountered with significant frequency.

The multitude of consistencies facilitates administration, which means the user does not have to make decisions beforehand that could prove incorrect, for example by administering a food that is too solid to a patient who in a few hours has experienced a decrease in chewing ability and who would therefore be unable to consume the nutrients he needs, with obvious negative consequences for his health.

The processed refrigerated FSMP is therefore suitable for adapting to any situation in which the patient may find himself, even contingent or unpredictable situations that arise immediately before the meal is administered.

As anticipated in the first part of this description, the problem addressed in conceiving the present invention is a rather complex problem, because it aims to achieve a main objective, which consists in feeding patients with practical swallowing difficulties, trying to overcome the limits posed by such difficulties, but at the same time also seeking to satisfy other prerogatives.

In fact, the teachings of the invention, in addition to satisfying the primary objective, must guarantee the satisfaction of a binding standard (because such foods are evidently subject to precise specification rules), but this must be done while maintaining flexibility in the variety of foods that must be able to be offered.

Furthermore, the invention aims to ensure the possibility of easily managing the administration processes even from the side of the structures responsible for this task, without neglecting the care of the patient's gratification, to whom we try to administer a pleasant meal even in a situation of debilitation in which the act of eating is often reduced to an effort that he faces out of duty, rather than a pleasure.

The intuition behind the invention lies in having noticed that ice cream has always been identified as a "comfort food", but, in the FSMP lists (i.e. official lists of products normally intended for people with nutritional difficulties) ice cream does not appear: although, the creamy consistency offers numerous advantages in various situations.

It's been estimated that more than 75% of seniors over 80 have experienced a decline in their olfactory abilities. The creaminess and refreshing sensation in the mouth, along with the texture of ice cream, can be a sensory tool to stimulate the palate. Furthermore, ice cream also triggers a sort of regression/nostalgia for the comfort food of childhood. Whatever the reason for its popularity, ice cream would likely appear to be an effective vehicle for calorie delivery in many older populations (e.g., those in nursing facilities or hospitals) who tend not to get sufficient nutrition, thus potentially prolonging their hospital stays longer than otherwise necessary.

The semi-solid and soft consistency of ice cream, in addition to its appealing flavor, also lends itself to resolving the eating problems of toothless patients who therefore cannot or do not manage to chew and/or swallow effectively and who are otherwise forced to regularly consume purees at every meal, thus losing interest in food.

The composition of the food preparation according to the invention is therefore based on the positive effects inherent in ice cream/mousse: given by its creamy and cold form, as well as by its taste.

The preparation was developed to meet the dietary needs resulting from malnutrition resulting due to acute or chronic degenerative disease, which makes it very difficult, if not (in some cases) impossible, for the patient to satisfy their nutritional needs through the consumption of commonly used foods.

In order to further clarify the teachings of the invention, and how these can be put into practice, a schematic illustration of the concepts underlying the invention is proposed, with the help of Figure 1: concepts that pertain both to the creation of the FSMP according to the invention, and to the method for their correct use.

The creation of any FSMP, and the food according to the invention is no exception, starts from the definition of a predetermined nutritional intake that must be guaranteed by the food itself.

In Figure 1, this predetermined nutritional intake is indicated by the number 190, and starting from it, an expert nutritionist, indicated in Figure 1 by the number 290, selects a set of basic ingredients in powder form, available, as such, from the offer of known foods, available in powder form.

Therefore, said expert nutritionist 290 will source powdered ingredients to meet the nutritional requirements (fats, proteins, sugars, vitamins, and so on) set to achieve the target nutritional intake 190.

The first teaching of the invention consists in the fact that a first group of ingredients with thickening and texturing properties must be selected in sufficient quantities. This first group of ingredients with thickening and texturing properties is indicated in Figure 1 with the number 101, and, typically, while contributing to providing a certain nutritional contribution, it does not allow for completing the predetermined nutritional contribution 190.

Therefore, the expert nutritionist 290 must find a second group of ingredients, indicated in Figure 1 with the number 102, with the aim of completely achieving the pre-established nutritional intake 190.

The sizing, that is, the quantitative determination of each individual ingredient, is certainly the result of the experience of the nutritionist 290, however, by starting the process from the composition of the first group of ingredients, that is, by trying to cover the nutritional intake 190 as much as possible, but without exceeding, with products belonging to the category of ingredients with thickening and structuring properties, it is then relatively simple for the nutritionist 290 to complete the nutritional requirements with the addition of appropriate ingredients from the second group.

It is noted that the nutritionist's task 290 is quite simplified by the fact that the nutritional characteristics of each individual elementary ingredient (both of the first and second group) are known characteristics, normally intrinsic to each individual raw material, and their combination achieves the pre-established result.

In summary, it can be stated that a fundamental characteristic of the invention lies in the fact that the ingredients must be selected not only based on nutritional criteria, but also include ingredients that, while possessing specific nutritional properties, also have thickening and structuring properties. Consequently, the composition of the first group of ingredients 101 must meet two requirements.
✔ A first requirement is of a technical nature, that is, the quantities of these ingredients must be sufficient so that, once mixed with other ingredients (as will be discussed later), the overall mixture has enough thickening and structuring capacity to take on the creamy consistency of an ice cream or a mousse.
✔ A second requirement is of a nutritional nature, in the sense that the nutritional intake of these ingredients must contribute as much as possible to the achievement of the final objective specified by the overall intake 190, even if they do not need to complete it.

The two groups of ingredients 101 and 102, in powder form, are then mixed together and packaged to form a FSMP according to the invention, which complies with the pre-established nutritional requirements, and which in Figure 1 is indicated with the number 100.

Having the FSMP 100 product, according to the invention, the remaining part of Figure 1 clarifies how this can be prepared so that a patient can take it.

The preparation process is very simple, and can be summarized in three very simple phases, indicated in Figure 1 with the numbers 301, 302 and 303, and which will be described in order below.

The first phase 301, is a dilution phase, which consists of combining the AFMS 100 with a fluid, indicated in Figure 1 with the number 110. Said fluid 110 can be simple water, and in this way the nutritional contribution guaranteed by the FSMP 100 is not substantially altered, but it can also be milk or even cream (i.e. ingredients which, to a certain extent, further increase the overall thickening capacities), being aware that, in this way, evidently, the overall nutritional contribution that will be administered to the patient is increased.

In any case, the diluted product composed of FSMP 100 and fluid 110 gives rise to an intermediate preparation, which is typically in fluid form, even if quite dense, and which in Figure 1 is indicated with the number 120.

The diluted product 120 is then subjected to a further mixing phase, indicated in Figure 1 with the number 302. The mixing 302 is carried out to make the diluted product 120 homogeneous and, in fact, it is a very simple operation, as it can be done manually, using a kitchen whisk, or using a common mini-appliance, present in many homes, as shown in Figure 1, where a domestic electric whisk is shown, indicated with the number 220. In any case, it is an absolutely simple operation to perform, just as simple as performing dilution 301, and as simple as the subsequent refrigeration phase, indicated in Figure 1 with the number 303.

This refrigeration phase 303 requires that the diluted product 120, suitably mixed, is placed for an appropriate amount of time in a freezer or refrigerator, i.e., in a very common household appliance present in all homes and/or healthcare facilities, and indicated in Figure 1 with the number 230.

In Figure 1, the number 130 indicates the food ready to be served to the patient. Thanks to its storage in the freezer or refrigerator, 230 it has the consistency of ice cream or mousse (depending on the temperature at which it was stored and the length of time it was stored). This transformation in consistency occurs because the intermediate food 120, once refrigerated, contains a sufficient quantity of ingredients with thickening and structuring properties, as explained previously.

We will now illustrate, by way of example, how a particular FSMP, i.e. a food with all the requirements to be recognized as such, was actually prepared.

This first FSMP, which can actually be used to feed patients with certain nutritional needs, is characterized by a high caloric density of 2 kcal/ml, and presents a series of nutritional requirements that an expert nutritionist 290 can satisfy by selecting various ingredients available in powder form drawing from the prior art.

By adopting the teachings of the present invention, such nutritionist 290, can divide such ingredients into two groups with specific characteristics.

The first group of ingredients is composed of: milk protein concentrate powder, fructose, inulin, coconut oil powder, glucose syrup powder, fat-reduced cocoa, maltodextrin, emulsifiers: E477, E471, E472e.

This first group consists of ingredients with thickening and structuring properties, which are present in sufficient quantities to guarantee, after cooling, the creamy consistency of an ice cream or mousse. However, these ingredients, although providing a nutritional contribution, are not sufficient to guarantee the nutritional requirements set for the FSMP that is intended to be created.

This expected nutritional intake 190 must therefore be achieved with the addition of a second group of ingredients composed of: Vitamins (A, D, E, K, C), Thiamine (B1), Riboflavin (B2), Niacin (B3), B6, Folic acid, (B12), Biotin, Pantothenic acid, Minerals (Sodium, Potassium, Chloride, Calcium, Phosphorus, Magnesium, Iron, Zinc, Copper, Manganese, Selenium, Chromium, Molybdenum, Iodine), choline, carnitine.

This second group of ingredients does not have thickening or structuring properties; however, the combination of the two groups of ingredients, used in powder form, and mixed together, constitute an FSMP 100 with the required nutritional characteristics which, in addition, also has sufficient thickening and structuring properties, guaranteed by the presence of the ingredients of the first group.

Consequently, this FSMP, dissolved in an equal amount of water, mixed to make it homogeneous, and refrigerated, guarantees the production of a food to be served to the patient, in the form of ice cream or mousse, and characterized by a very specific nutritional contribution.

In the example given, 120 ml of product reconstituted according to the instructions is prepared using 50 g of powdered preparation (i.e. FSMP 100) and 50 g of water, and has a nutritional value (given by the micro and macro nutrients present in the recipe) with the values indicated below, which, as mentioned, are easily controllable, with the precision that is required for this type of food:

| | | |
|---|---|---|
| Energy | 1014 kJ / 243 kcal | |
| Fat | 14,26 g - of which saturated fatty acids 14,1 | g |
| Carbohydrates | 11,73 | g |
| of which sugars | 9,12 | g |
| Fibers | 1,1 | g |
| Proteins | 15,66 | g |
| Salt | 0,19 | g |
| Vitamin A | 180,00 | µg |
| Vitamin D | 3 | µg |
| Vitamin E | 3,3 | mg |
| Vitamin K | 23 | µg |
| Vitamin C | 26 | mg |
| Thiamine (B1) | 0,5 | mg |
| Riboflavin (B2) | 0,58 | mg |
| Niacin (B3) | 3 | mg |
| Vitamin B6 | 0,58 | mg |
| Folic acid | 71 | µg |
| Vitamin B12 | 0,65 | µg |
| Biotin | 7 | µg |
| Pantothenic Acid | 1,5 | mg |
| Sodium | 75 | mg |
| Potassium | 250 | mg |
| Chloride | 160 | mg |
| Calcium | 160 | mg |
| Fosforo | 90 | mg |
| Magnesium | 30 | mg |
| iron | 2,2 | mg |
| Zinc | 1,7 | mg |
| Copper | 0,5 | mg |
| Manganese | 0,4 | mg |
| Selenium | 11 | µg |
| Chrome | 12,8 | µg |
| Molybdenum | 18,00 | µg |
| Iodine | 36,5 | µg |
| Choline | 90,00 | mg |
| Carnitine | 1 | mg |

The FSMP example just described proposes a food composed to meet a specific nutritional requirement. It is also clear that it is possible to use only some of the indicated ingredients, or add others, if the intention is to offer a FSMP with different characteristics. In any case, the recipe described, in addition to meeting the pre-established nutritional requirements, uses ingredients that can satisfy the tastes of a large number of people. However, the invention could be adapted to different patient tastes as well as different quantitative requirements, to offer a variety of flavors, in the case of multiple administrations, while still maintaining the predetermined nutritional characteristics required for the patient. In addition to the typical pleasantness of sweet flavors, ice cream, or mousse, can easily adapt to savory flavors, as is already happening in the natural evolution of ice cream in general, i.e., outside the context of the FSMP, which is here faced.

With the option of also managing savory flavors in the form of ice cream, the innovative nature of this product can certainly be maintained, adapting it to the administration of FSMP as a sort of complete meal and not just as a single course, which could appear to be a limitation at dessert.

### Variants and Concluding Remarks

In summary, the teachings of the present invention allow to satisfy the purposes for which it was conceived by exploiting in an unprecedented way skills in the preparation of ice cream, and by making appropriate modifications both to the ingredients usually used and to the preparation techniques typically adopted.

In fact, the preparation of an ice cream that is also a FSMP cannot be simply considered as the preparation of an ice cream with a different flavor.

It is particularly challenging to offer a set of ingredients that allow for accurate control of nutritional parameters, as well as the ability to package, with reasonable simplicity, the "portion" to be served to patients.

In the previous part of this description, it has already been highlighted how the invention can be implemented according to a very high number of variants.

The technical insight, common to all possible variations, consists in having balanced the known teachings used to prepare normal ice creams with new teachings that allow the preparation of a different type of ice cream, with characteristics that are partly different from those of normal ice creams.

The inventiveness is evident in the fact that the expertise of the ice cream making world has never before encountered the problem of packaging FSMP, and it is precisely this synergy of expertise, from disjointed worlds, that has allowed the development of a new and certainly inventive solution.

The taught solution is therefore optimized with respect to many independent aspects:
✔ medical nutritional parameters, since the various nutritional parameters of the final product can be easily controlled (the product must be a FSMP, with all that this entails);
✔ aspects related to ease of swallowing and pleasantness of intake;
✔ aspects related to the logistics of use: conservation, preparation and administration. The theoretical appeal of this solution is indisputable, as it offers the possibility of numerous advantages. Indeed, although it is quite evident that certain malnourished patients face significant daily difficulties in feeding them, no FSMP is offered in the form that most facilitates the practical intake of a food, namely ice cream, nor in a form that can adapt to the patient's changing needs thanks to the ability to quickly transform from semi-solid to liquid.

Therefore, since the proposed solution is undoubtedly and substantially advantageous, if it had been so obvious, and such that it could be developed by a generic expert in the sector, it would certainly have already been adopted.

The main implementation variations concern the fact that different equivalent ingredients can be used, and different utensils with the same functions can be used, both for the preparation of FSMP in the form of ice cream and for its serving. Indeed, a very important feature in these foods is also its usability by the interested party.

Due to its consistency, ice cream could be adapted to various solutions, however, the best solution at the current stage of the project is the cup for creamy ice cream and sorbet. The implementation examples described, however, must, precisely, be understood only as mere examples of practical implementation, but must in no case be understood in a limiting sense.

Other variants of the invention, not mentioned in the present invention, could be associated with the integration of the FSMP object of the invention with real medicinal substances, given that the latter could also benefit from the administration method offered by the teachings of the invention.

In this case, however, further technical constraints could be introduced, which would in turn have to be resolved, and could give rise to evolutions or improvements of the invention as here described.

Ultimately, the invention identifies and defines a series of fundamental characteristics that a class of FSMP, or the method for their preparation, must possess to solve the complex technical (and practical) problem identified within the scope of the invention. The essential features envisaged by the invention are, in reality, relatively few, and therefore it is certainly possible to conceive of much more complex systems characterized by many other additional prerogatives, in addition to those described. However, beyond the essential characteristics (many or few as they may be), which are also explicitly stated in the independent claim, the forms of implementation with which the addressed problem can be solved can vary in many other details, giving rise to different variants of the same invention.

Only some of these variants have already been discussed, and the variants cited do not exhaust the possible cases, therefore, the man skilled in the art can certainly propose many others without departing from the scope of the invention as it results from the present description and from the claims attached hereto which form an integral part of the present description.

## Claims

1. A group of FSMP (Food for Special Medical Purposes) in which each specific FSMP (100) belonging to said group of FSMP has a pre-established nutritional intake (190) in terms of proteins, caloric density, fats, sugars, mineral salts, vitamins and fibers; said FSMPs (100) being supplied in the form of a granular preparation, or a powder, which:
i. with the addition of a fluid substance (110) that acts as a solvent, such as water, or milk, or vegetable drinks or cream,
ii. and suitably cooled,
take on the creamy consistency of an ice cream or a mousse (130), and being said FSMPs (100) each comprising two groups of ingredients suitably mixed:
a. a first group of ingredients (101), common to all FSMPs (100) of said FSMP group, available in granular or powder form, having thickening and structuring properties, i.e., ingredients suitable for guaranteeing a delay in dissolving after cooling, and the creamy consistency that the FSMP (100) must have to be consumed;
b. and a second group of other elementary ingredients (102), specific for each FSMP (100) of said FSMP group, always in granular or powder form, each in such quantity as to provide its own nutritional contribution, so as to reach said pre-established nutritional contribution for each FSMP (100), by adding it to the nutritional contributions already provided by said ingredients with thickening and structuring capacity (101) indicated in the previous point "a", and by the fluid substance (110) indicated in the previous point "ii.".

2. Group of FSMP (100) according to claim 1, wherein said first group of ingredients (101) with thickening and structuring capacity also comprises concentrated milk proteins in powder form.

3. Group of FSMP (100) according to claim 1, wherein said first group of ingredients (101) with thickening and structuring capacity also comprises fructose, and/or inulin, and/or coconut oil powder, and/or glucose syrup powder.

4. Group of FSMP (100) according to claim 1, wherein said first group of ingredients (101) with thickening and structuring capacity also comprises fat-reduced cocoa and/or maltodextrin.

5. Group of FSMP (100) according to claim 1, wherein said first group of ingredients (101) with thickening and structuring capacity also comprises emulsifiers of the type: E477, and/or E471, and/or E472e.

6. Group of FSMP (100) according to claim 1, comprising at least a subset of specific FSMP (100) wherein said second group of ingredients (102) also comprises vitamins of type: A, and/or D, and/or E, and/or K, and/or C.

7. FSMP (100) according to claim 1, comprising at least a subset of specific FSMP (100) wherein said second group of ingredients (102) also comprises: Thiamine (B1), and/or Riboflavin (B2), and/or Niacin (B3), and/or Folic acid, and/or Vitamins B6 and B12.

8. A method of preparing a food based on a generic FSMP (100), which includes at least the following essential steps:
A. take a dose of said FSMP (100) in granular or powder form, according to claim 1,
B. preparation of an initially liquid food (120), by diluting said dose of said FSMP (100) in granular form, indicated in the previous step "A.", in a fluid edible substance,
C. continue the preparation by arranging for a short conservation of the initially liquid food, indicated in the previous step "B." optionally:
I. or in the freezer, at a temperature between -17° and -21°, thus obtaining a creamy food with the consistency of ice cream,
II. or in the refrigerator, where, after a short period of storage, you get a food with the consistency of a mousse;
D. after a time depending on the physical state of interest, extraction from the freezer or refrigerator of the creamy food, indicated in the previous step "C.", and presentation of the finished food to the patient for whom it was prepared.

9. Method of preparing a food based on a generic FSMP (100) according to claim 8, wherein said dilution phase indicated in the previous step "B.", is completed by manual mixing, with a whip or with another type of tool suitable for facilitating said manual mixing operation.
